# EUROPEAN PATENT APPLICATION

(11) **EP 4 175 032 A1**
(43) Date of publication of application: **03.05.2023**
(21) Application number: 21829363.7
(22) Date of filing: 09.03.2021
(51) Int. Cl.: H01M 50/153, H01M 50/543, H01M 50/172, H01M 50/147, H01M 50/528, H01M 10/04

(54) **RECHARGEABLE BATTERY**

(30) Priority: 26.06.2020 KR 20200078575
(71) Applicant: Samsung SDI Co., Ltd., Yongin-si, Gyeonggi-do 17084 (KR)
(72) Inventor: KO, Heejung, Yongin-si, Gyeonggi-do 17084 (KR); KIM, Kijung, Yongin-si, Gyeonggi-do 17084 (KR); PARK, Yongjin, Yongin-si, Gyeonggi-do 17084 (KR); WOO, Byongchul, Yongin-si, Gyeonggi-do 17084 (KR); LEE, Jong-Ha, Yongin-si, Gyeonggi-do 17084 (KR)
(74) Representative: Gulde & Partner
(86) International application number: PCT/KR2021/002865
(87) International publication number: WO 2021/261705

(57) **Abstract**

A rechargeable battery includes: an electrode assembly including a first electrode, a second electrode, and a separator disposed between the first electrode and the second electrode; a case that is connected to the first electrode to accommodate the electrode assembly and includes an opening exposing the electrode assembly; a cap plate configured to be coupled with the case to cover an outer area of the opening, and configured to include a through-hole exposing a central area of the opening; and a terminal plate that is insulation-bonded to the cap plate to cover the through-hole and is connected to the second electrode, wherein the terminal plate includes a first plate and a second plate.

## Description

### [Technical Field]

The present disclosure relates to a rechargeable battery.

### [Background Art]

Generally, a rechargeable battery is a battery that may be repeatedly charged and discharged.

Recently, as the demand for wearable devices such as headphones, earphones, smartwatches, and body-attached medical devices, and the use of wireless communication such as Bluetooth increases, the need for ultra-small rechargeable batteries to be mounted on the wearable devices is increasing.

The ultra-small rechargeable battery includes an electrode terminal positioned on an outer surface thereof and an electrode assembly positioned therein to be connected to the electrode terminal.

However, when a shape of the electrode terminal is complicatedly processed depending on a shape of the outer surface configuring the ultra-small rechargeable battery, a material contained in the electrode terminal is limited to a metal such as aluminum having high electrical conductivity and easy forming.

### [Disclosure]

### [Technical Problem]

An embodiment is to provide a rechargeable battery that may easily process an electrode terminal of the rechargeable battery into a complex shape and in which materials included in the electrode terminal of the rechargeable battery are variously applied.

### [Technical Solution]

An aspect provides a rechargeable battery including: an electrode assembly including a first electrode, a second electrode, and a separator disposed between the first electrode and the second electrode; a case that is connected to the first electrode to accommodate the electrode assembly and includes an opening exposing the electrode assembly; a cap plate configured to be coupled with the case to cover an outer area of the opening, and configured to include a through-hole exposing a central area of the opening; and a terminal plate that is insulation-bonded to the cap plate to cover the through-hole and is connected to the second electrode, wherein the terminal plate includes a first plate positioned on the cap plate, and a second plate that is coupled to the first plate to pass through the through-hole and is connected to the second electrode.

The second plate may be welded to the first plate.

An area of the second plate may be smaller than that of the first plate.

The second plate may include a different material from the material included in the first plate.

The first plate may have stronger corrosion resistance than the second plate.

The second plate may have higher electrical conductivity than the first plate.

The first plate may have less ductility than the second plate.

A thickness of the second plate may be thicker than that of the first plate.

The case and the cap plate may have the same polarity as the first electrode, and the first plate of the terminal plate may have the same polarity as the second electrode.

The rechargeable battery may further include a thermal-fusion layer that is positioned between the cap plate and the first plate of the terminal plate and insulation-bonds the cap plate and the first plate.

The electrode assembly may further include a first electrode tab extending from the first electrode to be coupled to the case, and a second electrode tab extending from the second electrode to be coupled to the second plate of the terminal plate.

### [Advantageous Effects]

According to the embodiment, a rechargeable battery that may easily process an electrode terminal of the rechargeable battery into a complex shape and in which materials included in the electrode terminal of the rechargeable battery are variously applied, is provided.

### [Description of the Drawings]

FIG. 1 illustrates a perspective view of a rechargeable battery according to an embodiment.
FIG. 2 illustrates a cross-sectional view taken along line II-II of FIG. 1.
FIG. 3 illustrates a cross-sectional view of a portion "A" of FIG. 2.

### [Mode for Invention]

The present invention will be described more fully hereinafter with reference to the accompanying drawings, in which embodiments of the invention are shown. As those skilled in the art would realize, the described embodiments may be modified in various different ways, all without departing from the scope of the present invention.

In addition, unless explicitly described to the contrary, the word "comprise" and variations such as "comprises" or "comprising" will be understood to imply the inclusion of stated elements but not the exclusion of any other elements.

Hereinafter, a rechargeable battery according to an embodiment will be described with reference to FIG. 1 to FIG. 3.

The rechargeable battery according to the embodiment is an ultra-small rechargeable battery, and may include a coin cell or a button cell, but the present invention is not limited thereto, and it may include a cylindrical or pin-type cell.

Here, the coin cell or the button cell is a thin coin-type or button-type cell, and may mean a battery having a ratio (height/diameter) of a height to a diameter of 1 or less, but is not limited thereto. Since the coin cell or the button cell is mainly cylindrical, a horizontal cross-section is circular, but the present invention is not limited thereto, and a horizontal cross-section may be oval or polygonal. In this case, the diameter may mean a maximum distance of the cell based on a horizontal direction of the cell, and the height may mean a maximum distance (distance from a flat bottom surface thereof to a flat uppermost surface) of the cell based on a vertical direction of the cell.

FIG. 1 illustrates a perspective view of a rechargeable battery according to an embodiment. FIG. 2 illustrates a cross-sectional view taken along line II-II of FIG. 1.

Referring to FIG. 1 and FIG. 2, a rechargeable battery 1000 according to an embodiment includes an electrode assembly 100, a case 200, a cap plate 300, a terminal plate 400, and a thermal-fusion layer 500.

The electrode assembly 100 is accommodated in the case 200. A lower portion of the electrode assembly 100 faces a bottom portion of the case 200, and an upper portion of the electrode assembly 100 faces the cap plate 300 covering an opening 210 of the case 200 and the terminal plate 400. The upper and lower portions of the electrode assembly 100 may have planar shapes that are parallel to each other, but are not limited thereto.

The electrode assembly 100 includes a first electrode 110, a second electrode 120, a separator 130, a first electrode tab 140, and a second electrode tab 150.

The first electrode 110 and the second electrode 120 are spaced apart from each other, and the separator 130 including an insulating material is disposed between the first electrode 110 and the second electrode 120. The first electrode 110 may be a negative electrode (anode) and the second electrode 120 may be a positive electrode (cathode), but the present invention is not limited thereto, and the first electrode 110 may be a positive electrode and the second electrode 120 may be a negative electrode.

The first electrode 110 has a shape of a band extending in one direction, and includes a negative electrode coated region that is a region where a negative active material layer is coated to a current collector of a metal foil (for example, a Cu foil) and a negative electrode uncoated region that is a region where an active material is not coated. The negative electrode uncoated region may be disposed at one end portion in an extending direction of the first electrode 110.

The second electrode 120 has a band shape that is spaced apart from the first electrode 110 to extend in one direction with the separator 130 interposed therebetween, and includes a positive electrode coated region that is a region where a positive active material layer is coated to a current collector of a metal foil (for example, an Al foil) and a positive electrode uncoated region that is a region where an active material is not coated. The positive electrode uncoated region may be disposed at one end portion in an extending direction of the second electrode 120.

The separator 130 extends in one direction between the first electrode 110 and the second electrode 120 to prevent a short circuit between the first electrode 110 and the second electrode 120.

The first electrode 110, the separator 130, and the second electrode 120 are sequentially stacked and wound in a jelly roll shape, but are not limited thereto, and may be formed in various known shapes. Each of the first electrode 110, the second electrode 120, and the separator 130 may include various known materials.

The first electrode tab 140 extends from the first electrode 110 of the electrode assembly 100 to the case 200. The first electrode tab 140 is coupled to a bottom portion of the case 200 to connect the first electrode 110 and the case 200. The first electrode tab 140 contacts the first electrode 110 and the case 200. By the first electrode tab 140, the case 200 has the same polarity as that of the first electrode 110 (for example, a negative electrode).

The second electrode tab 150 extends from the second electrode 120 of the electrode assembly 100 to the terminal plate 400. The second electrode tab 150 is coupled to a second plate 420 of the terminal plate 400 to connect the second electrode 120 and the terminal plate 400. The second electrode tab 150 contacts the second electrode 120 and the terminal plate 400. By the second electrode tab 150, the terminal plate 400 has the same polarity (for example, a positive electrode) as that of the second electrode 120 (for example, a positive electrode).

Meanwhile, a center pin penetrating a center of the electrode assembly 100 in a vertical direction is positioned at a center portion of the electrode assembly 100, and the center pin may support the first electrode tab 140 and the second electrode tab 150, but is not limited thereto.

The case 200 is coupled to the first electrode 110 of the electrode assembly 100 to house the electrode assembly 100. The case 200 includes an opening 210 that exposes an upper portion of the electrode assembly 100. The bottom portion of the case 200 is connected to the first electrode 110 of the electrode assembly 100 by the first electrode tab 140 to have the same polarity (for example, a negative electrode) as that of the first electrode 110 (for example, a negative electrode). The case 200 has a cylinder shape for accommodating the electrode assembly 100 of a jelly roll shape, but is not limited thereto, and may have various known shapes. The case 200 may accommodate various known electrolyte solutions along with the electrode assembly 100. An outer surface of the case 200 may be an anode terminal of the rechargeable battery 1000. In this case, an outer surface of the first plate 410, which is an outer surface of the terminal plate 400, may be a cathode terminal of the rechargeable battery 1000. Meanwhile, a plating layer may be coated on the outer surface of the case 200, but the present invention is not limited thereto, and various known coating layers may be coated on the outer surface of the case 200.

The opening 210 of the case 200 is covered by the cap plate 300 and the terminal plate 400.

The cap plate 300 is combined with the case 200 to cover an outer area of the opening 210. The cap plate 300 includes a through-hole 310 that exposes a central area of the opening 210. The cap plate 300 is directly coupled to a side wall of the case 200 in which the opening 210 of the case 200 is formed by a welding process to cover the outer area of the opening 210. The cap plate 300 has a ring shape by the through-hole 310 formed in a central portion thereof, but is not limited thereto. The cap plate 300 is combined with the case 200 to have the same polarity (for example, a negative electrode) as that of the first electrode 110 (for example, a negative electrode). The cap plate 300 includes stainless steel, but is not limited thereto, and may include a metal such as aluminum, nickel, and copper.

Meanwhile, a plating layer may be coated on the outer surface of the cap plate 300, but the present invention is not limited thereto, and various known coating layers may be coated on the outer surface of the cap plate 300.

The terminal plate 400 is insulation-bonded to the cap plate 300 to cover the through-hole 310 of the cap plate 300. The terminal plate 400 is disposed on the cap plate 300, but is not limited thereto, and may be disposed between the cap plate 300 and the electrode assembly 100. The terminal plate 400 covers the central area of the opening 210 of the case 200 exposed by the through-hole 310 of the cap plate 300. The terminal plate 400 covers the central area of the opening 210, and the cap plate 300 covers the outer area of the opening 210, thus the opening 210 of the case 200 is completely covered by the terminal plate 400 and the cap plate 300. The terminal plate 400 is connected to the second electrode tab 150 of the electrode assembly 100 to be connected to the second electrode 120 of the electrode assembly 100. The terminal plate 400 has the same polarity as that of the second electrode 120 (for example, a positive electrode).

The terminal plate 400 includes the first plate 410 and the second plate 420.

The first plate 410 is positioned on the cap plate 300 and overlaps the cap plate 300. The first plate 410 has a larger area than the second plate 420. For example, the first plate 410 may have a larger diameter than the second plate 420. A lower surface of the first plate 410 is in contact with the thermal-fusion layer 500, and the first plate 410 is insulation-bonded to the cap plate 300 by the thermal-fusion layer 500.

The second plate 420 corresponds to the through-hole 310 of the cap plate 300 to be coupled to the lower surface of the first plate 410. The second plate 420 protrudes from the first plate 410 and passes through the through-hole 310. A lower surface of the second plate 420 is in contact with the second electrode tab 150. As the second plate 420 is coupled with the second electrode tab 150, the second plate 420 and the first plate 410 of the terminal plate 400 have the same polarity as that of the second electrode 120.

A plating layer may be coated on the outer surface of the terminal plate 400, but the present invention is not limited thereto, and various known coating layers may be coated on the outer surface of the terminal plate 400.

FIG. 3 illustrates a cross-sectional view of a portion "A" of FIG. 2.

Referring to FIG. 3, the first plate 410 and the second plate 420 may include different materials or the same material, but are not limited thereto. The second plate 420 may be welded and coupled to the first plate 410, but is not limited thereto. A first thickness T1 of the second plate 420 is thicker than a second thickness T2 of the first plate 410, and the second plate 420 protrudes from the first plate 410 to be coupled to the second electrode tab 150.

The terminal plate 400 has a complex three-dimensional shape so that the second plate 420 protrudes from the central area of the first plate 410 to pass through the through hole 310 to be coupled to the second electrode tab 150, but it is simply formed by the first plate 410 and the second plate 420 that are two plates having different thicknesses and areas being combined, thus it is not necessary for the material included in the terminal plate 400 that is an electrode terminal to be limited to a metal such as aluminum having high electrical conductivity and easy forming. That is, the terminal plate 400 including the first plate 410 and the second plate 420 coupled to each other may be easily processed into a complex electrode terminal by applying various materials without considering the ease of forming.

For example, each of the first plate 410 and the second plate 420 included in the terminal plate 400 may include the same material or different materials including at least one of a metal including aluminum, stainless steel, nickel, copper, molybdenum, gold, or silver; an organic material including a conductive polymer or the like; and an inorganic material including a carbon nanotube or a graphene.

The second plate 420 of the terminal plate 400 may include a different material from that of the first plate 410, but is not limited thereto.

The first plate 410 of the terminal plate 400 may have stronger corrosion resistance than the second plate 420, and the second plate 420 may have higher electrical conductivity than the first plate 410.

For example, the first plate 410 may include nickel, and the second plate 420 may include aluminum, but are not limited thereto.

Since the first plate 410 of the terminal plate 400, which is an electrode terminal exposed to the outside, includes a material having stronger corrosion resistance than the second plate 420 thereof and the second plate 420 connected to the second electrode tab 150 of the electrode assembly 100 has higher electrical conductivity than the first plate 410, the formation of an oxide film on the surface of the first plate 410 contacting the contact terminal of the device is suppressed, and the electrical conductivity of the terminal plate 400 is improved, thus an increase in contact resistance between the first plate 410 of the terminal plate 400 that is the electrode terminal of the rechargeable battery 1000 and the contact terminal of the device is suppressed, and the connection resistance between the second plate 420 of the terminal plate 400 and the second electrode tab 150 of the electrode assembly 100 is reduced.

The first plate 410 of the terminal plate 400 has less ductility than the second plate 420. The first plate 410 has greater rigidity than the second plate 420.

Since the first plate 410 of the terminal plate 400 has less ductility than the second plate 420, the deformation of the first plate 410 of the terminal plate 400 that is the electrode terminal of the rechargeable battery 1000 due to the pressure in contact with the contact terminal of the device is suppressed, so that the decrease in the contact area between the first plate 410 and the contact terminal of the device due to the deformation of the first plate 410 of the terminal plate 400 is suppressed, thus the increase in contact resistance between the first plate 410 of the terminal plate 400 that is the electrode terminal of the rechargeable battery 1000 and the contact terminal of the device is suppressed.

The thermal-fusion layer 500 is disposed between the cap plate 300 and the first plate 410 of the terminal plate 400, and insulation-bonds the cap plate 300 and the first plate 410 of the terminal plate 400. The thermal-fusion layer 500 contains an insulating material, and insulates between the cap plate 300 and the terminal plate 400. The thermal-fusion layer 500 is thermally fusion-bonded between the cap plate 300 and the first plate 410 of the terminal plate 400 by heat or a laser beam. The thermal bonding layer 500 may include various known materials that insulation-bond the cap plate 300 and the terminal plate 400. Since the cap plate 300 and the terminal plate 400 are bonded by the thermal-fusion layer 500, the opening 210 of the case 200 in which the electrode assembly 100 is accommodated is completely sealed by the cap plate 300, the terminal plate 400, and the thermal-fusion layer 500.

As described above, since the rechargeable battery 1000 according to the embodiment includes the terminal plate 400 that is the electrode terminal formed by simply combining the first plate 410 and the second plate 420, which are two plates having different thicknesses and areas, it is not necessary for the material included in the terminal plate 400 that is the electrode terminal to be limited to a metal such as aluminum having high electrical conductivity and easy forming, and accordingly, the terminal plate 400 that is the electrode terminal may be easily processed into a complex shape, and materials included in the terminal plate 400 may be variously applied.

That is, the rechargeable battery 1000 in which the terminal plate 400 that is the electrode terminal thereof may be easily processed into a complex shape and the materials included in the terminal plate 400 that is the electrode terminal thereof may be variously applied, is provided.

In addition, in the rechargeable battery 1000 according to the embodiment, since the first plate 410 of the terminal plate 400 includes a different material from the material included in the second plate 420, the first plate 410 has stronger corrosion resistance and strength (lower ductility) than the second plate 420, and the second plate 420 has higher electrical conductivity than the first plate 410, the formation of an oxide film on the surface of the first plate 410 contacting the contact terminal of the device and the deformation thereof due to pressure are suppressed, and the electrical conductivity of the terminal plate 400 is improved, thus an increase in contact resistance between the first plate 410 of the terminal plate 400 that is the electrode terminal of the rechargeable battery 1000 and the contact terminal of the device is suppressed, and the connection resistance between the second plate 420 of the terminal plate 400 and the second electrode tab 150 of the electrode assembly 100 is reduced.

That is, since the first plate 410 and the second plate 420 included in the terminal plate 400 that is the electrode terminal of the rechargeable battery 1000 respectively include different materials, the rechargeable battery 1000 capable of applying various electrical effects, chemical effects, and physical effects to the terminal plate 400 that is the electrode terminal is provided without considering the easiness of forming.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

### [Description of symbols]

electrode assembly 100, case 200, cap plate 300, terminal plate 400, first plate 410, second plate 420

## Claims

1. A rechargeable battery comprising:
an electrode assembly including a first electrode, a second electrode, and a separator disposed between the first electrode and the second electrode;
a case that is connected to the first electrode to accommodate the electrode assembly and includes an opening exposing the electrode assembly;
a cap plate configured to be coupled with the case to cover an outer area of the opening, and configured to include a through-hole exposing a central area of the opening; and
a terminal plate that insulation-bonded to the cap plate to cover the through-hole and is connected to the second electrode,
wherein the terminal plate includes
a first plate positioned on the cap plate, and
a second plate that is coupled to the first plate to pass through the through-hole and is connected to the second electrode.

2. The rechargeable battery of claim 1, wherein
the second plate is welded to the first plate.

3. The rechargeable battery of claim 1, wherein
an area of the second plate is smaller than that of the first plate.

4. The rechargeable battery of claim 1, wherein
the second plate includes a different material from the material included in the first plate.

5. The rechargeable battery of claim 4, wherein
the first plate has stronger corrosion resistance than the second plate.

6. The rechargeable battery of claim 4, wherein
the second plate has higher electrical conductivity than the first plate.

7. The rechargeable battery of claim 4, wherein
the first plate has less ductility than the second plate.

8. The rechargeable battery of claim 1, wherein
a thickness of the second plate is thicker than that of the first plate.

9. The rechargeable battery of claim 1, wherein
the case and the cap plate have the same polarity as the first electrode, and
the first plate of the terminal plate has the same polarity as the second electrode.

10. The rechargeable battery of claim 1, further comprising
a thermal-fusion layer that is positioned between the cap plate and the first plate of the terminal plate and insulation-bonds the cap plate and the first plate.

11. The rechargeable battery of claim 1, wherein
the electrode assembly further includes:
a first electrode tab extending from the first electrode to be coupled to the case; and
a second electrode tab extending from the second electrode to be coupled to the second plate of the terminal plate.
